# EUROPEAN PATENT SPECIFICATION

(11) **EP 4 479 879 B1**
(45) Date of publication and mention of the grant of the patent: **14.10.2026**
(21) Application number: 22707240.2
(22) Date of filing: 18.02.2022
(51) Int. Cl.: G06K 7/10

(54) **METHOD AND SYSTEM FOR DETERMINING THE LOCATION OF AN ITEM IN A STORAGE SYSTEM**
VERFAHREN UND SYSTEM ZUR BESTIMMUNG DES STANDORTS EINES ARTIKELS IN EINEM SPEICHERSYSTEM
PROCÉDÉ ET SYSTÈME DE DÉTERMINATION DE L'EMPLACEMENT D'UN ARTICLE DANS UN SYSTÈME DE STOCKAGE

(43) Date of publication of application: 25.12.2024
(73) Proprietor: SATO Corporation, Tokyo 108-0023 (JP)
(72) Inventor: GRAY, Jeff, St Peters, NSW 2044 (AU)
(74) Representative: Grünecker Patent- und Rechtsanwälte PartG mbB
(86) International application number: PCT/IB2022/051445
(87) International publication number: WO 2023/156820

(56) References cited:
- US-A1- 2011 199 211
- US-A1- 2020 161 742

## Description

### Technical Field

The present disclosure relates, generally, to determining a location of a tag located in a storage cabinet and, more particularly, to a system for, and a method of, determining a location of a radio-frequency identification (RFID) tagged item in a multi-shelf cabinet.

### Background

Radio-frequency identification (RFID) is a wireless identification method where data is electronically stored on a tag, and the data is readable by an RFID reader in order to identify, locate, and/or track the tagged items. RFID systems are not necessarily configured to provide an accurate location of a tagged item, but instead often provide a general location of a tagged item. For example, where tagged items are located in a cabinet, an RFID reader is often configured to ascertain the presence of a tag within the cabinet, but not necessarily on which shelf or in which drawer within the cabinet the tagged item is located.

RFID readers operate by generating an electrical signal, producing an electromagnetic field that interacts with the antenna coils of RFID tags to interrogate the tags and obtain identification information from the tags.
US 2020/161742 A1 describes a storage container with an RFID antenna system with a plurality of antenna coils that can be activated selectively. The document describes a method of determining the location of a plurality of tagged items. The independent claims are delimited against this document.
US 2011/199211 A1 describes various RFID arrangements for inventory control with the possibility of determining the location of items.

Any discussion of documents, acts, materials, devices, articles or the like which has been included in the present specification is not to be taken as an admission that any or all of these matters form part of the prior art base or were common general knowledge in the field relevant to the present disclosure as it existed before the priority date of each claim of this application.

### Summary

The present invention is defined by the features of the independent claims.

The step of scanning for tags with a first antenna at a plurality of power levels may comprise activating an antenna coil of the first antenna at each of the plurality of power levels. The step of identifying each tag sighted by the first antenna at each power level may comprise receiving response signals from at least a portion of the plurality of tags at each power level. A field intensity emitted from each antenna may vary a predetermined amount according to each power level. The power levels may be logical power levels that correspond to actual power levels required for predetermined antenna ranges. The method may comprise deriving a logical power level for each antenna that corresponds to actual power levels required to reach a predetermined distance.

The method may further comprise the step of calibrating antenna power levels in the storage system. The step of calibrating the antenna power levels in the storage system may comprise placing a plurality of calibration tags into the storage system; scanning for the calibration tags with each antenna at a plurality of different power levels; identifying the minimum power level each antenna sights each calibration tag; and setting one or more calibration values for each antenna from the identified minimum power levels. The steps of calibrating the antenna power levels in the storage system may be repeated with the calibration tags being located at a plurality of different levels within the storage system. The step of calibration may compensate for antenna coil differences such that each logical power level of each antenna corresponds to substantially the same antenna coil range.

The tags may be set to a lower power mode, that reduces the number of tags in the storage system that are active, prior to scanning for the tags. The tags may comprise memory. The method may further comprise the step of storing a value representative of the power level at which the tag is first sighted. The memory may comprise a time stamp field. The value representative of the power level at which the tag is first sighted may be stored in the time stamp. The value representative of the power level at which the tag is first sighted field may comprise a power level ID.

The step of estimating a position of each tag of interest using the determined antenna and the lowest power level that identified that tag may comprises identifying a height level of the storage system at which the tag is located. The step of identifying a height level of the storage system at which the tag of interest is located may comprises applying a power level offset. The power level offset may biases antenna power levels towards a lower height level for each height level of the storage system. The power level offset may be applied to a logical power level for the antenna. The step of estimating a position of each tag of interest using the determined antenna and the lowest power level that identified that tag may comprise identifying a horizontal position of the tag of interest at the height level of the storage system at which the tag is identified as being located. The horizontal position of the tag of interest may be determined to be at a distance from the antenna with the lowest power level that identified that tag that corresponds to a range of that antenna at that power level.

The first antenna and at least one further antenna may be located on or in the storage system. The storage system may comprise height levels and at least some of the height levels comprise at least two overlapping antennas with overlapping coils. Each of the at least two antennas with overlapping coils may comprise a first loop having a first current flow and a second loop having a second current flow in a rotationally opposite direction to the first current flow. The overlapping antenna coils of the overlapping antennas may be arranged to overlap so that the loops are aligned along an axis, thereby generating a continuous reading zone along that axis. The continuous reading zone may correspond to a section of the storage system.

These and other aspects and features will now become apparent to those skilled in the art upon review of the following description of specific non-limiting embodiments in conjunction with the accompanying drawings.

### Brief Description of Drawings

The detailed description of illustrative (non-limiting) non-limiting embodiments will be more fully appreciated when taken in conjunction with to the accompanying drawings in which:
Figure 1 is a schematic representation of a non-limiting embodiment of an RFID system.
Figure 2A is a diagrammatic representation of an RFID antenna and its magnetic field coupling with an RFID tag.
Figure 2B is a diagrammatic view of a storage system having a plurality of shelves and RFID antennas distributed throughout.
Figure 3 illustrates an example non-limiting embodiment of a cabinet for which the RFID system of Figure 1 may be used to locate an RFID tagged item within the cabinet.
Figure 4 is a schematic representation of a prior art antenna configuration.
Figure 5 is a flow diagram of a non-limiting embodiment of a method of determining a location of an item within a storage system.
Figure 6 is a schematic representation of a multi-level antenna arrangement sighting a tag.

In the drawings, like reference numerals designate similar parts.

The drawings are not necessarily to scale and may be illustrated by phantom lines, diagrammatic representations and fragmentary views. In certain instances, details that are not necessary for an understanding of the non-limiting embodiments or that render other details difficult to perceive may have been omitted.

### Description

Reference will now be made in detail to various non-limiting embodiments of methods and systems for determining the location of an item in a storage system. It should be understood that modifications will be possible within scope of the appended claims.

Furthermore, it will be recognized by one of ordinary skill in the art that certain structural and operational details of the non-limiting embodiment(s) discussed hereafter may be modified or omitted (i.e. non-essential) altogether. In other instances, well known methods, procedures, and components have not been described in detail.

### System Overview

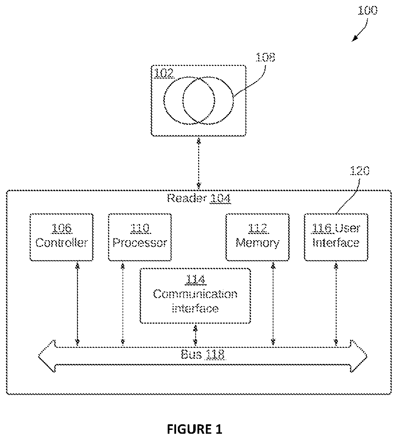

**Figure** 1 of the drawings is a schematic representation of a non-limiting embodiment of an RFID reader system 100 for determining a location of an item within sections of a region. The system 100 has an arrangement of antenna coils 102 in communication with an RFID reader 104. The RFID reader 104 comprises an antenna controller 106 configured to selectively power each antenna coil 108 at a plurality of different power levels, and a processor 110. The processor 110 is configured to receive a plurality of response signals from the arrangement of antenna coils 102. The response signals are generated in response to one or more interrogation signals from the reader 104. In some non-limiting embodiments the controller and the processor may be provided in one shared processing unit.

In addition to the controller 106 and the processor 110, the RFID reader 104 includes various modules 120 that support the operation of the RFID reader 104. These modules may include one or more of: memory 112 (e.g., volatile memory, non-volatile memory, and/or other storage), a communication interface 114 supporting communication between the reader 104 and other equipment (for example in the form of a network interface controller or other interface hardware), and a user interface 116. The modules 120 of the RFID reader 104 cooperate with each other by exchanging data over a bus 118.

The user interface 116 may include, for example, a display means such as a screen and/or a touch screen together with a keyboard and/or other buttons/levers, etc. The communication interface 114 may be in communication with or support communication between the RFID reader 104 and a user device (not illustrated). The user device may include a computer, laptop, handheld device, tablet, smart phone, etc. The user device may include software for receiving and displaying information received from the reader 104, for example via an end user application in the form of application software such as a mobile "app", a website, and/or a web application etc configured to receive and display tag location data as determined by the reader 104.

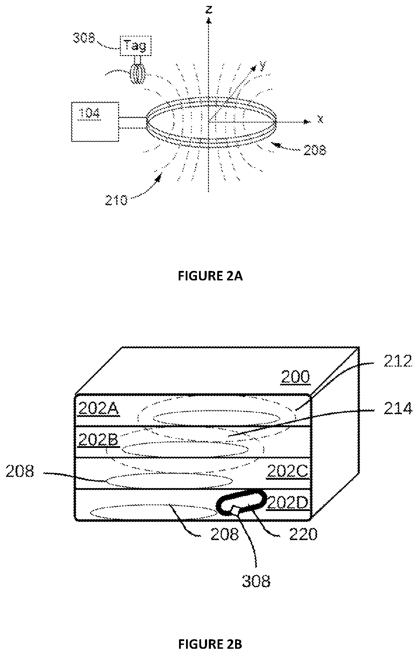

**Figure 2A** illustrates the operation of an RFID reader 104 in communication with an antenna coil 208. The antenna coil 208 generates a magnetic field H 210 around the coil as illustrated in broken lines. The magnetic field 210 defines a reading zone around the coil in which RFID tags can be detected. The magnetic field is able to couple with the tag antenna of an RFID tag 308 located within the magnetic field, either above or below the coil 208. In the exemplary non-limiting embodiment, the antenna coil 208 is positioned on, within, or otherwise associated with the floor of a shelf so that the shelf may be considered to lie in the X-Y plane illustrated in Figure 2A. Accordingly, it will be understood that RFID tags may be located in the generated magnetic field either above the shelf floor (in the +Z direction), or below the shelf floor (in the -Z direction), i.e., on a lower shelf.

**Figure 2B** illustrates a storage system 200 having a plurality of levels in the form of shelves 202A-202D. Items 220 contained within the storage system 200 have RFID tags 308 able to be read by one or more of the antenna coils 208. It should be appreciated that the shelves 202A-202D may take other forms such as, for example, racks, drawers, trays, compartments, or the like. Although only one antenna coil per shelf is indicated diagrammatically for clarity, it should be appreciated that this is for example only, and that more or less (including zero) antenna coils may be provided for each shelf. In some non-limiting embodiments each shelf has a plurality of antenna coils to provide accurate item location determination. Each coil is able to generate a magnetic field, thereby providing a reading zone 212 in which tags can be detected by the antenna.

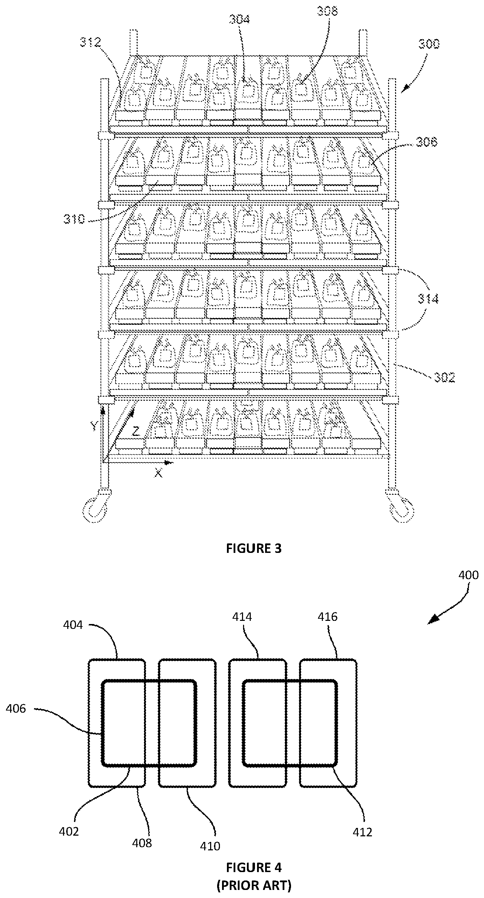

The storage system may comprise a cabinet or fridge. Another example storage system 300 is illustrated in **Figure 3** of the drawings, being a trolley or cabinet 300 with the items to be located being plasma boxes or blood bags 306 with electronic tags in the form of RFID tags 308 affixed thereto. Each blood bag 306 is placed on a cabinet level (for example in a drawer or on a shelf 314), and each tagged item is also placed within a section 310 of the cabinet 300, each section 310 in the form of container, for example a tray 312. In this non-limiting embodiment, each shelf 314 includes a plurality of containers 312. As illustrated, the example cabinet 300 includes a plurality of levels in the form of shelves 314 (arranged vertically as labelled by the Y-axis), each shelf 314 including a plurality of trays 312. In the example non-limiting embodiment, the trays 312 are arranged in a single row along the width of the cabinet 300 (arranged horizontally as labelled by the X-axis).

Each tray 312 is longitudinal and configured to hold a plurality of RFID tagged blood bags 306 stacked in the longitudinal direction of the tray 312 across the depth of the cabinet 300 (as labelled by the Z-axis). Each blood bag 306 has an RFID tag 308 with a tag antenna. In the illustrated example, where the blood bags 306 are stacked in the Z direction, the tag antennas on the RFID tags 308 lie substantially in the X-Y plane. In alternative non-limiting embodiments, the trays may be arranged and/or stacked in various alternative configurations, for example each shelf may include two parallel rows of trays.

### Antenna Arrangement

**Figure 4** of the drawings is a schematic representation of a prior art antenna configuration 400. In the example, two antenna coils 402 are positioned relative to four trays 404 so that each coil 402 is associated with two of the trays 404. With this configuration, if the first antenna coil 406 provides a signal to a reader indicating the presence of an RFID tag, then that RFID tag may be located in either one of the first two trays 408, 410 associated with the first antenna coil 406. Similarly, if the second antenna coil 412 provides a signal to a reader indicating the presence of an RFID tag, then that RFID tag may be located in either one of the two trays 414, 416 associated with the second antenna coil 412. With this antenna configuration 400 it is therefore not possible to accurately locate an RFID tag within one of the four trays.

Another drawback of the configuration in Figure 4 is that the maximum power produced by each coil is limited by Electromagnetic Compatibility (EMC) regulations which provide limitations for electromagnetic emissions at certain distances from electronic equipment. One solution is to configure the two coils 402 so that the current in one coil flows in an opposite direction to the current in the other coil, thereby resulting in magnetic fields that cancel each other out in the far field. However, if both coils are activated at the same time to result in such a net zero far field, then it is impossible to distinguish in which of the four trays 404 a tagged item is located.

In some non-limiting embodiments each level of a storage system (e.g. each shelf 202A-202D of the storage system 200 of figure 2) has antenna coils that overlap such that each item 220 with an RFID tag located therein may be powered by one or more coils and/or be seen by coils on multiple levels. In use, at least one antenna coil may have a first loop having a first current flow and a second loop having a second current flow in a rotationally opposite direction to the first current flow with at least one other antenna coil overlapping such that the loops are aligned along an axis, thereby generating a continuous reading zone along that axis.

Using such an antenna arrangement can create a plurality of reading zones, and in some non-limiting embodiments the reading zones are aligned with sections of the storage system, that can assist with narrowing down the likely location of one or more tags of interest. Furthermore, such an antenna arrangement can be utilised to reduce external emissions to assist the storage system meeting EMC requirements.

### Method Overview

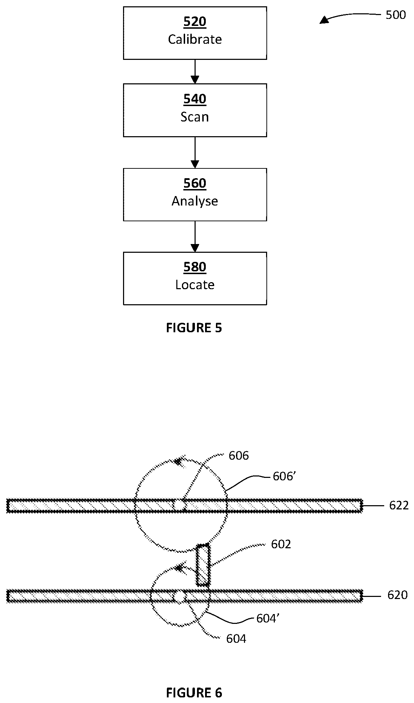

**Figure 5** shows a flow diagram of a non-limiting embodiment of a method 500 of determining a location of an item associated with a detectable tag in a storage system. The method comprises, at 520 performing an antenna power level calibration and then at 540 a scan to ascertain tags detectable by each antenna at different power levels. The method further comprises, at 560 analysing the scan to identify each tag sighted by each antenna at a plurality of power levels and then, at 580 locating the item using that analysis. In a further step (not illustrated), the determined location may be displayed on a user interface 116 of the RFID reader 104 and/or provided to an end user via the reader's communication interface 114 (for example to be displayed on a user device such as a laptop running an end user application). Each step will be described in further detail as follows.

### Antenna Power Level Calibration

In typical operation, antenna coils are operated at a maximum power level to provide the largest possible reading range and thereby maximise reception of RFID tags to determine their presence. However, such an approach does not reveal the location of the tag or its associated item. The range of an antenna coil may be reduced by reducing the power supplied thereto. This may occur by converting a digital power level signal, such as from a processor 110, to an analogue voltage (typically, although not necessarily, between 0 and 12-15V) powering the antenna coil. The effective range of the antenna coil varies proportionally to its power level. An antenna power level calibration can be performed to determine how power level correlates with distance for each antenna coil.

On a shelf antenna, for example, different antenna coils may have different geometries which means that the actual range of each coil will likely vary. In order to compare sighting distances between different antenna coils, the calibration measures power needed to read tags at several distances and set calibration values for each antenna coil. Calibration should only need to be performed once for each unique model of storage system. The calibration values for each antenna coil can be stored and reused for each model.

A number of logical power level steps are first determined. A tag reader might have, for example, a large number of discrete power levels, such as 256 or more. Whilst it is possible to use such a large number of power levels to provide a high resolution, it is generally impractical to do so, at least due to the time it would take to perform the calibration and subsequent measurements. Therefore in some non-limiting embodiments between 2 and 32 power levels are used, for example between 2 and 16 power levels. For most applications it has been found that using between 2 and 8 power levels, depending upon the size and nature of the antenna and/or storage system, provides a sufficiently useful resolution of tag distance from each antenna.

To perform calibration, calibration tags are placed into the storage system. In some non-limiting embodiments the calibration tags may be separate and placed manually. In other non-limiting embodiments the calibration tags are mounted to at least one movable calibration member that allows the tags to (a) be mounted predetermined distances apart from each other and (b) be moved collectively. The movable calibration member should be made of a non-metallic material, such as cardboard or plastic, such that it does not interfere with the antenna fields. In some non-limiting embodiments it may comprise a flat surface, such as a sheet of cardboard or plastic, with the calibration tags arranged linearly or in a two dimensional array. In some circumstances it may be advantageous for the calibration member to comprise a shape that extends meaningfully in each dimension such that the calibration tags can be arranged three dimensionally.

Once the calibration tags have been placed as desired in the storage system, each antenna coil scans for the calibration tags at a plurality of different power levels. The relationship between power level and sighted calibration tags can be used to determine the effective range of each antenna coil at each power level.

An example calibration process may therefore be as follows:
1) Place calibration tags on a level of the storage system, e.g. starting with the lowest shelf of a cabinet.
2) For each antenna coil, starting from the lowest power level increase power stepwise until one or more tags is sighted and recording the power level at which each calibration tag sighting occurred.
3) Move the calibration tags to the highest height possible on that level, e.g. just under the shelf above in a shelved storage cabinet.
4) Repeat the power level scan in step 2 and record that as a second power level.
5) Move the calibration tags onto another level of the storage system, e.g. the shelf above and/or below the previous one.
6) Repeat the power level scan in step 2 and record that as a third power level.
7) Repeat the above steps for every level in the storage system.

With this example in mind, it should be appreciated that the calibration member may be constructed of a suitable geometry with sufficient calibration tags at appropriate locations that obviates the need for steps 3 and 4.

At the end of such a measurement phase, there will be three measurements of the lowest power level needed to sight calibration tags at the nearest, middle, and furthest distances. The raw measurements are converted into a set of logical power level settings to use for a given number of power levels. The logical power levels can be different to actual power levels for each antenna and therefore can be mapped to account for differing sensitivities of each antenna. The logical power levels can therefore correspond to distance using a known antenna input power. In some non-limiting embodiments the final power level step is at maximum power, so all remaining calibration tags at any distance within maximum range will be sighted. In some non-limiting embodiments the furthest distances are within the same shelf that the antenna is associated with. In other non-limiting embodiments the furthest distances are within a shelf above and/or below the shelf that the antenna is associated with.

Each antenna coil may have different physical power levels for each logical power level. The calibration process therefore helps to ensure that sightings of the same tag on different antenna coils can be compared with the power level input for each antenna coil approximating antenna coil range.

For example, on antenna coil A it may take a power setting of 100 to sight tags at a distance of 10cm. But on antenna coil B it may only require a power setting of 60 to see the same distance. The calibration values can be used to compensate for this difference, so each logical power level corresponds to roughly the same distance from the antenna coil.

In some non-limiting embodiments, the calibration process includes calibrating the RFID reader power levels for the shelf that an antenna coil is associated with, i.e. to associate power levels with respective predefined distances from the antenna coil within the same shelf. In some non-limiting embodiments, the calibration process further includes calibrating the RFID reader power levels for the shelf that the antenna coil is associated with as well as for the shelf below and/or the shelf above the shelf that the antenna coil is associated with.

### Item/Tag Scan

In standard (prior art) operation where presence of tags is all that needs to be determined, each tag is only sighted once on the first antenna it is seen on and then muted for the rest of the scan of other antennas. A tag sighting message, i.e. the information generated by an RFID reader when it initially gets a response from a previously unknown tag as part of the scanning process, is only generated for the first reply received even though readers are continuously scanning and as part of this process will re-sight known tags multiple times. In this type of non-specific location scanning, tag sighting messages are generated immediately whenever the initial sighting occurs, and the non-specific location information typically only comprises a single antenna number.

In contrast, for the non-limiting embodiments described herein where specific location scanning occurs, each tag may be sighted on more than one antenna, and a tag sighting message may or may not be generated for any of these actual sightings. In some non-limiting embodiments a tag sighting message is generated by the reader 104 after completing the scan of all antennas at the end of the analysis phase where it will refer to a specific location, such as "shelf 4 left side". The specific location tag sighting message may be the only tag sighting message generated and provided by the reader 104, or may be in addition to the non-specific tag sighting messages associated with actual antenna reads.

In some non-limiting embodiments an item/tag scan searches for tags using each antenna coil at multiple different power levels. The lowest power level for each antenna to sight a tag is recorded. The tag reader performs a complete scan of each antenna coil such that every tag will be re-seen multiple times on as many antenna coils as it can be powered from.

For each sighting, the antenna coil name and the lowest power level needed to sight the tag are recorded. By the end of the scan, each tag will have a list of sightings on different antennas and at different power levels. This tag sight data is stored for subsequent analysis in determining the location of a tag and, hence, the location of its associated item.

The scan can be carried out in a number of ways. A deep stack power level scan and a shallow stack power level scan have been identified as two useful variants which will now be described.

In some application tags are deeply stacked which means that multiple tags are stacked closely together. A common example of deeply stacked tags is in document tracking where each document has a tag. In this situation, a slower but reliable method is used which can sight tags in the middle of a deep stack. To use this method, tags are first set to a lower power mode, such as a quarter power mode such that only a quarter of the tag population is active at one time.

An example process to scan for tags that is well suited to deeply stacked tags is as follows:
1) Set an antenna coil to a lowest power level.
2) Scan for all tags visible at this power level.
3) Set the next highest power level.
4) Repeat the scan for all tags at this power level.
5) Repeat steps 3 and 4 until the highest power level has been reached (such that all power levels have been scanned).

In other applications tags may be shallowly stacked, meaning that no more than two tags should be stacked closely together. For example, a product in a box which has a tag attached. Even in a crate full of tagged products the tags are spaced apart because the size of the product box keeps them spaced apart. It is possible for two tags on two boxes to end up adjacent to one another (e.g. if their respective tags are facing each other), but no more deeply than this.

In this situation, a faster method can be implemented. To use this method, all tags are set to a normal power mode, which means they are powered all the time. This makes the scan process four times faster than using a quarter power mode as described for the deeply stacked situation.

This technique utilises tag memory on the tag itself. In this non-limiting embodiment the tag has Temporary RAM (TRAM) used to store tag settings or information. For example, PJM chips have tag memory that can be utilised as a time stamp and/or to mute or unmute a tag.

In the case of a 'C-Series PJM Chip', which is considered a suitable chip for use in the RFID tags, the time stamp memory is a 16-bit TRAM field. When a tag receives its first command after powering on, it stores a tag reader Time Stamp field in the chip's memory. When any future commands are received, this stored value is returned in a Time Stamp field of the tag's reply.

Utilising the memory of such a tag, an example process to scan for tags that is well suited to shallow stacked tags with memory in the form of a time stamp field is as follows:
1) Set the lowest power level and set the command Time Stamp field to a power level ID (which might initially equal 1 for example).
2) Transmit a single command containing this Time Stamp field.
3) Set the next highest power level, increment the power level ID, and set the Time Stamp field to the new power level ID.
4) Transmit a single command containing this Time Stamp field.
5) Repeat steps 3 and 4 for each power level except the final power level.
6) For the final power level, perform a full tag identification scan that reads the set power level ID from the Time Stamp field of each tag.

When the final scan is performed and all tags are sighted, each tag's reply will contain a Time Stamp. As the time stamp field of each tag was set with a power level ID the first time that tag came within range, the returned Time Stamps define the lowest power level at which each tag was sighted.

### Location Analysis

Once a tag reader has completed a scan of all antenna coils, each tag seen will have a set of sightings from one or more antenna coils at different power levels. This tag sighting data can be used to determine the location of each tag in the storage system.

For example, **Figure 6** illustrates a tag 602 affixed to an item on shelf 620. Above shelf 620 is a higher shelf 622. As illustrated, the tag 602 may be identified by the lower shelf antenna 604 as well as by the higher shelf antenna 606. In the illustrated example, the tag 602 is identified at a lower field strength (604') by the lower level antenna 604 than the higher field strength (606') required for the high level antenna 606 because the tag 602 is closer to the lower level antenna 604.

Each unique tag reader installation has a definition of the layout of antenna coils, so there is a known relationship between the physical structure of the storage system and its antenna coils. This relationship can be used to understand the meaning of multiple sightings of a tag. The antenna coil layout defines a hierarchy consisting of:
1) Shelf - all antenna coils are located on the same horizontal plane; and
2) Horizontal Position - groups of antennas that only power tags in a section of a level (e.g. shelf) of the storage system (only certain antenna designs offer this capability).

For each shelf level, a power level offset can be defined to bias results towards the lower shelf. The power level offset may be an offset applied to a logical power level for the antenna. This is because a tag seen at similar logical power levels on two different height shelf levels is more likely to be on the lower shelf when the antenna coils are positioned on, in, against or close to the floor of a shelf because the magnetic field will couple with tags above the antenna coil (i.e. in the shelf) and below the antenna coil (i.e. in the shelf below).

On the bottom shelf, for example, antennas may have a power level offset of zero, because it is a good reference point. The next shelf up could have an offset (e.g. 2), the shelf above a greater offset (e.g. 4), and so on (e.g. offset increases in steps of 2 for each shelf). For each tag sighting, the power level offset can be added to a logical power level. So if, for example, a tag was sighted at a logical power level of 1 on the bottom shelf, it would still be 1, whereas on the next shelf up it would become 3, and so on. Using this example, if a tag was in the middle between two shelves and seen at the same logical power level (without offset) by antennas on both shelves, then the location would be identified as the lower shelf (i.e. the lower power) because with the offset the antenna associate with the lower shelf is now sighting the tag two steps lower than the sighting from the antenna associated with the shelf above. It should be appreciated that the offset numbers provided are for example only. In reality, the offset numbers are likely to be different, and have more variance, as different offsets are used depending on various factors such as the number of logical power levels, the spacing between shelves, and antenna sensitivities etc.

Referring to the non-limiting embodiment in Figure 2B for example, where there are four shelves each with an antenna coil (or an antenna coil arrangement comprising more than one coil) associated with a respective shelf floor, coil 1 will detect tags located in shelf 1 202D (and no tags below, as this is the bottom shelf). Coil 2 will detect tags located in shelf 2 202C, as well as tags located in shelf 1 202D below as the distance from coil 2 upwards and within shelf 2 is comparable to the distance from coil 2 downwards and within shelf 1. Coil 3 202B will detect tags located in shelf 3 and tags located in shelf 2 202C. In this exemplary non-limiting embodiment, if both coil 4 and coil 3 detect that same tag, the processor 110 of the reader 104 is configured to determine that the tag is located on shelf 3 202B (i.e., biased to the lower shelf). This is because the reading zones 212 formed by the magnetic fields of coil 3 and coil 4 overlap within shelf 3. The overlap reading zone 214 illustrated in Figure 2B lies below shelf 4 202A and above and within shelf 3 202B.

It will be understood that in alternative non-limiting embodiments where the antenna coil arrangement is different, the height level bias may be applied differently. For example, if an antenna coil is positioned in the roof of a shelf, and/or where an overlap reading zone is generated in a top one of two shelves, then the processor of the RFID reader may be configured to determine that the location of a tag identified by two antenna coils may be the upper of two adjacent shelves. Similarly, it will be understood that the principles described herein may be applicable to other configurations of containers, for example a single-shelf container having horizontally adjacent sections (e.g. two or more drawers next to one another) wherein antenna configurations associated with the various sections are operated so that tags in more than one section may be detected by the antenna arrangement(s) associated with one section (or tags in more than two sections may be detected by the antenna arrangement(s) associated with one or more sections).

If horizontal position is not being used, then each shelf height level definition will define a set of antenna coils that are at that shelf height level. If horizontal position is used, then each position at each shelf height level will define a set of antenna coils for that location.

For each tag, all sighting antennas are examined. Even if horizontal location is to be determined, the first step is to determine which shelf height level the tag is on.

In order to determine the vertical location of a tag, it is first assumed to be located at one of a plurality of discrete storage system height levels (e.g. shelves). The power level offset is applied to the sighting power level for each tag to compensate for the vertical relationship between the discrete storage system height levels. The height location of the tag is determined to be the discrete storage system height level with the lowest logical power level including compensation for the power level offset.

If horizontal location is to be determined as well, then a second examination is performed using only tag sightings at the determined discrete storage system height level. No power level offset applies in determining the horizontal location at that level as all antenna coils are on the same horizontal plane. The lowest logical power level from an antenna coil therefore determines the horizontal position along the shelf. If a tag sighting is of close or equal power levels in two positions, then the tag is determined as being at an intermediate location between the two antenna coil groups. For example, a shelf with 4 horizontal antenna groups would have an additional 3 positions for the mid-points between two groups.

Once a tag location determination has been made, the tag location as determined by the processor 110 of the reader 104 may be displayed via the reader user interface 116 and/or may be sent to an end user application via the reader communication interface 114. The specific location may be described by the name of the layout. For example, "shelf 6" or, if horizontal location is included, "shelf 2, position 4".

### Advantages

The system described herein allows tagged item locations to be determined (with an appropriately selected resolution) and provided to a user to assist with speedy and accurate location and identification of the tagged item. Advantageously, the location determination works in storage systems with open shelves. The method is efficient and can be performed with negligible performance penalty to existing systems. The system can be scaled to locate any number of tagged items in the storage system.

Using a blood supply service freezer as an example, previously staff would have to search for a specific blood bag by hand in -40°C temperature. This is not only uncomfortable to the staff, but is prone to human error and possibly inadvertently damaging handled bags. With the system described herein the staff would be able to first interrogate the location of the needed blood bag and know where it is located (i.e. the shelf and where on the shelf it is), saving a lot of time and discomfort, avoiding potential damage, and reducing the likelihood of human error.

Using a blood shelving management system as another example, tagged blood bags are stored in trays that are over 1 metre long. The trays are removable and are slide on a shelf of a multi-tier storage system. Previous RFID systems can, at best, only determine a coarse location of the tagged blood bag. For example, as being located either in a left, right, or a central zone of the shelf. The system described herein provides a high-resolution method that can accurately locate one or more blood bags of interest.

It is noted that the foregoing has outlined some of the more pertinent non-limiting embodiments. It will be clear to those skilled in the art that modifications to the disclosed non-limiting embodiments can be effected within the spirit and scope of the appended claims. As such, the described non-limiting embodiment ought to be considered to be merely illustrative of some of the more prominent features and applications. This includes the mixing and matching of features. Elements and/or functions between various non-limiting embodiment(s) is expressly contemplated herein so that one of ordinary skill in the art would appreciate from this disclosure that features, elements and/or functions of one embodiment may be incorporated into another embodiment as appropriate within the scope of the appended claims, unless described otherwise, above. The invention is defined by the appended claims.

In the claims which follow and in the preceding description, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments.

## Claims

1. A method (500) of determining the location of a plurality of tagged items in a storage system, the method comprising:
scanning (540) for tags with a first antenna at a plurality of power levels;
identifying each tag of interest sighted by the first antenna at each power level of the plurality of power levels;
scanning for tags with at least one further antenna at a plurality of power levels;
identifying (560) each tag of interest sighted by each further antenna at each power level of the plurality of power levels; and
determining the antenna with the lowest power level that identified each tag of interest;
**characterized by**
estimating (580) a position of each tag of interest using the determined antenna and the lowest power level that identified that tag by applying a power level offset that biases antenna power levels towards a lower height level for each height level of the storage system and thereby identifying a height level of the storage system at which the tag is located.

2. The method of determining the location of a plurality of tags in a storage system of claim 1, wherein one or more of the following conditions apply:
the step of scanning for tags with a first antenna at a plurality of power levels comprises activating an antenna coil of the first antenna at each of the plurality of power levels and the step of identifying each tag sighted by the first antenna at each power level comprises receiving response signals from at least a portion of the plurality of tags at each power level;
a field intensity emitted from each antenna varies a predetermined amount according to each power level; and
the power levels are logical power levels that correspond to actual power levels required for predetermined antenna ranges.

3. The method of claim 1 or claim 2, further comprising calibrating (520) the antenna power levels in the storage system.

4. The method of claim 3, wherein calibrating the antenna power levels in the storage system comprises:
placing a plurality of calibration tags into the storage system;
scanning for the calibration tags with each antenna at a plurality of different power levels;
identifying the minimum power level each antenna sights each calibration tag; and
setting one or more calibration values for each antenna from the identified minimum power levels, and wherein calibrating the antenna power levels in the storage system is repeated with the calibration tags being located at a plurality of different levels within the storage system.

5. The method of claim 3 or claim 4, wherein calibrating the antenna power levels compensates for antenna coil differences such that each logical power level of each antenna corresponds to the same antenna coil range.

6. The method of any one of the preceding claims, wherein the tags are set to a lower power mode, that reduces the number of tags in the storage system that are active, prior to scanning for the tags.

7. The method of any one of the preceding claims, wherein one or more of the following conditions apply:
the tags comprise memory and the method further comprises the step of storing a value representative of the power level at which the tag is first sighted, and the memory is a time stamp field and the value representative of the power level at which the tag is first sighted being stored in the time stamp field is a power level ID;
the power level offset is applied to a logical power level for the antenna.

8. The method of any one of the preceding claims, wherein the step of estimating a position of each tag of interest using the determined antenna and the lowest power level that identified that tag comprises identifying a horizontal position of the tag of interest at the height level of the storage system at which the tag is identified as being located.

9. The method of claim 8, wherein the horizontal position of the tag of interest is determined to be at a distance from the antenna with the lowest power level that identified that tag that corresponds to a range of that antenna at that power level.

10. The method of any one of the preceding claims, wherein the first antenna and at least one further antennas are located on or in the storage system.

11. The method of claim 10, wherein the storage system comprises height levels and at least some of the height levels comprise at least two overlapping antennas with overlapping coils.

12. The method of claim 11, wherein each of the at least two antennas with overlapping coils comprises a first loop having a first current flow and a second loop having a second current flow in a rotationally opposite direction to the first current flow.

13. The method of claim 12, wherein the overlapping antenna coils of the overlapping antennas are arranged to overlap so that the loops are aligned along an axis, thereby generating a continuous reading zone along that axis.

14. The method of claim 13, wherein the continuous reading zone corresponds to a section of the storage system.

15. A system (100) for determining the location of an RFID tagged item located in a storage system configured to contain a plurality of RFID tagged items, the system comprising:
a plurality of antenna coils (102) configured to be associated with one or more height levels of the storage system;
an antenna controller (106) configured to energise the antenna coils at a power level that corresponds to a received power level signal; and
a processor (110) in communication with the antenna controller, the processor configured to:
output a plurality of power level signals to the antenna controller to selectively activate each RFID antenna coil at a plurality of different power levels;
receive response signals from each antenna coil at each power level;
identify each RFID tag sighted in each received response signal; and
determine the antenna coil with the lowest power level that identified each RFID tag of interest;
**characterized in that** the processor (110) is further configured to
estimate a position of at least one RFID tagged item of interest using the determined antenna coil and the lowest power level that identified its tag, by:
applying a power level offset that biases antenna power levels towards a lower height level for each height level of the storage system, and thereby identifying a height level of the storage system at which the tag is located.

## Patentansprüche

1. Verfahren (500) zum Bestimmen des Standorts einer Vielzahl von getaggten Elementen in einem Speichersystem, wobei das Verfahren umfasst:
Abtasten (540) nach Tags mit einer ersten Antenne bei einer Vielzahl von Leistungsstufen;
Identifizieren von jedem interessierenden Tag, das von der ersten Antenne bei jeder Leistungsstufe der Vielzahl von Leistungsstufen erfasst wird;
Abtasten nach Tags mit wenigstens einer weiteren Antenne bei einer Vielzahl von Leistungsstufen;
Identifizieren (560) von jedem interessierenden Tag, das von jeder weiteren Antenne bei jeder Leistungsstufe der Vielzahl von Leistungsstufen erfasst wird; und
Bestimmen der Antenne mit der niedrigsten Leistungsstufe, die jedes interessierende Tag identifiziert hat;
**gekennzeichnet durch**
Schätzen (580) einer Position von jedem interessierenden Tag unter Verwendung der bestimmten Antenne und der niedrigsten Leistungsstufe, die dieses Tag identifiziert hat, durch Anwenden eines Leistungsstufenversatzes, der die Antennenleistungsstufen in Richtung einer niedrigeren Höhenstufe für jede Höhenstufe des Speichersystems verzerrt, und dadurch Identifizieren einer Höhenstufe des Speichersystems, auf der das Tag angeordnet ist.

2. Verfahren zum Bestimmen des Standorts einer Vielzahl von Tags in einem Speichersystem nach Anspruch 1, wobei eine oder mehrere der folgenden Bedingungen zutreffen:
der Schritt des Abtastens nach Tags mit einer ersten Antenne bei einer Vielzahl von Leistungsstufen umfasst das Aktivieren einer Antennenspule der ersten Antenne bei jeder der Vielzahl von Leistungsstufen und der Schritt des Identifizierens von jedem Tag, das von der ersten Antenne bei jeder Leistungsstufe erfasst wird, umfasst das Empfangen von Antwortsignalen von wenigstens einem Abschnitt der Vielzahl von Tags bei jeder Leistungsstufe;
die von jeder Antenne abgestrahlte Feldstärke variiert um einen vorbestimmten Betrag gemäß jeder Leistungsstufe; und
die Leistungsstufen sind logische Leistungsstufen, die tatsächlichen Leistungsstufen entsprechen, die für vorbestimmte Antennenbereiche benötigt werden.

3. Verfahren nach Anspruch 1 oder 2, ferner umfassend das Kalibrieren (520) der Antennenleistungsstufen im Speichersystem.

4. Verfahren nach Anspruch 3, wobei das Kalibrieren der Antennenleistungsstufen im Speichersystem umfasst:
Anordnen einer Vielzahl von Kalibrier-Tags im Speichersystem;
Abtasten nach den Kalibrier-Tags mit jeder Antenne bei einer Vielzahl von verschiedenen Leistungsstufen;
Identifizieren der Mindestleistungsstufe, bei der jede Antenne jedes Kalibrier-Tag erfasst; und
Festlegen von einem oder mehreren Kalibrierwerten für jede Antenne aus den identifizierten Mindestleistungsstufen, wobei das Kalibrieren der Antennenleistungsstufen im Speichersystem wiederholt wird, während die Kalibrier-Tags bei einer Vielzahl von verschiedenen Stufen im Speichersystem angeordnet sind.

5. Verfahren nach Anspruch 3 oder 4, wobei das Kalibrieren der Antennenleistungsstufen Antennenspulenunterschiede kompensiert, so dass jede logische Leistungsstufe von jeder Antenne dem gleichen Antennenspulenbereich entspricht.

6. Verfahren nach einem der vorhergehenden Ansprüche, wobei die Tags auf einen niedrigeren Leistungsmodus festgelegt werden, der die Zahl von Tags im Speichersystem, die aktiv sind, vor dem Abtasten nach Tags reduziert.

7. Verfahren nach einem der vorhergehenden Ansprüche, wobei eine oder mehrere der folgenden Bedingungen zutreffen:
die Tags umfassen einen Speicher und das Verfahren umfasst ferner den Schritt des Speicherns eines Werts, der für die Leistungsstufe repräsentativ ist, bei der das Tag erstmals erfasst wird, und der Speicher ist ein Zeitstempelfeld und der Wert, der für die Leistungsstufe repräsentativ ist, bei der das Tag erstmals erfasst wird, und der im Zeitstempelfeld gespeichert wird, ist eine Leistungsstufen-ID;
der Leistungsstufenversatz wird auf eine logische Leistungsstufe der Antenne angewendet.

8. Verfahren nach einem der vorhergehenden Ansprüche, wobei der Schritt des Schätzens einer Position von jedem interessierenden Tag unter Verwendung der bestimmten Antenne und der niedrigsten Leistungsstufe, bei der dieses Tag identifiziert wurde, das Identifizieren einer horizontalen Position des interessierenden Tags auf der Höhenstufe des Lagersystems umfasst, auf der das Tag als angeordnet identifiziert wurde.

9. Verfahren nach Anspruch 8, wobei die horizontale Position des interessierenden Tags als ein Abstand zur Antenne mit der niedrigsten Leistungsstufe, die dieses Tag identifiziert hat, das einem Bereich dieser Antenne bei dieser Leistungsstufe entspricht, bestimmt wird.

10. Verfahren nach einem der vorhergehenden Ansprüche, wobei die erste Antenne und wenigstens eine weitere Antenne auf dem oder im Speichersystem angeordnet sind.

11. Verfahren nach Anspruch 10, wobei das Speichersystem Höhenstufen umfasst und wenigstens einige der Höhenstufen wenigstens zwei überlappende Antennen mit überlappenden Spulen umfassen.

12. Verfahren nach Anspruch 11, wobei jede der wenigstens zwei Antennen mit überlappenden Spulen eine erste Schleife mit einem ersten Stromfluss und eine zweite Schleife mit einem zweiten Stromfluss, der in einer zum ersten Stromfluss entgegengesetzten Drehrichtung verläuft, aufweist.

13. Verfahren nach Anspruch 12, wobei die überlappenden Antennenspulen der überlappenden Antennen so angeordnet sind, dass sie sich überlappen, so dass die Schleifen entlang einer Achse ausgerichtet sind, wodurch entlang dieser Achse ein durchgehender Lesebereich erzeugt wird.

14. Verfahren nach Anspruch 13, wobei der durchgehende Lesebereich einem Abschnitt des Speichersystems entspricht.

15. System (100) zum Bestimmen des Standorts eines RFID-getaggten Elements, das in einem Speichersystem angeordnet ist, das zum Enthalten einer Vielzahl von RFID-getaggten Elementen ausgebildet ist, wobei das System umfasst:
eine Vielzahl von Antennenspulen (102), ausgebildet zum Verbinden mit einer oder mehreren Höhenstufen des Speichersystems;
ein Antennensteuergerät (106), ausgebildet zur Stromversorgung der Antennenspulen bei einer Leistungsstufe, die einem empfangenen Leistungsstufensignal entspricht; und
einen Prozessor (110) in Kommunikation mit dem Antennensteuergerät, wobei der Prozessor ausgebildet ist zum:
Ausgeben einer Vielzahl von Leistungsstufensignalen an das Antennensteuergerät zum selektiven Aktivieren von jeder RFID-Antennenspule bei einer Vielzahl von verschiedenen Leistungsstufen;
Empfangen von Antwortsignalen von jeder Antennenspule bei jeder Leistungsstufe;
Identifizieren von jedem RFID-Tag, das in jedem empfangenen Antwortsignal erfasst wird; und
Bestimmen der Antennenspule mit der niedrigsten Leistungsstufe, die jedes interessierende RFID-Tag identifiziert hat;
**dadurch gekennzeichnet, dass** der Prozessor (110) ferner ausgebildet ist zum
Schätzen einer Position von wenigstens einem interessierenden RFID-getaggten Element unter Verwendung der bestimmten Antennenspule und der niedrigsten Leistungsstufe, die dessen Tag identifiziert hat, durch:
Anwenden eines Leistungsstufenversatzes, der die Antennenleistungsstufen in Richtung einer niedrigeren Höhenstufe für jede Höhenstufe des Speichersystems verzerrt, und dadurch Identifizieren einer Höhenstufe des Speichersystems, auf der das Tag angeordnet ist.

## Revendications

1. Procédé (500) de détermination de l'emplacement d'une pluralité d'articles munis d'étiquette dans un système de stockage, le procédé comprenant les étapes consistant à :
balayer (540) des étiquettes au moyen d'une première antenne à une pluralité de niveaux de puissance ;
identifier chaque étiquette d'intérêt repérée par la première antenne à chaque niveau de puissance de la pluralité de niveaux de puissance ;
balayer des étiquettes au moyen d'au moins une autre antenne à une pluralité de niveaux de puissance ;
identifier (560) chaque étiquette d'intérêt repérée par chaque autre antenne à chaque niveau de puissance de la pluralité de niveaux de puissance ; et
déterminer l'antenne ayant le niveau de puissance le plus faible qui a identifié chaque étiquette d'intérêt ;
**caractérisé par**
l'estimation (580) d'une position de chaque étiquette d'intérêt au moyen de l'antenne déterminée et du niveau de puissance le plus faible ayant identifié cette étiquette, en appliquant un décalage de niveau de puissance qui polarise des niveaux de puissance d'antenne vers un niveau de hauteur inférieur pour chaque niveau de hauteur du système de stockage, et l'identification ainsi d'un niveau de hauteur du système de stockage au niveau duquel l'étiquette est située.

2. Procédé de détermination de l'emplacement d'une pluralité d'étiquettes dans un système de stockage selon la revendication 1, dans lequel une ou plusieurs des conditions suivantes s'appliquent :
l'étape consistant à balayer des étiquettes au moyen d'une première antenne à une pluralité de niveaux de puissance comprend l'activation d'une bobine d'antenne de la première antenne à chacun de la pluralité de niveaux de puissance et l'étape consistant à identifier chaque étiquette repérée par la première antenne à chaque niveau de puissance comprend la réception de signaux de réponse d'au moins une partie de la pluralité d'étiquettes à chaque niveau de puissance ;
une intensité de champ émise par chaque antenne varie d'une quantité prédéterminée en fonction de chaque niveau de puissance ; et
les niveaux de puissance sont des niveaux de puissance logiques correspondant à des niveaux de puissance réels requis pour des portées d'antenne prédéterminées.

3. Procédé selon la revendication 1 ou la revendication 2, comprenant en outre l'étalonnage (520) des niveaux de puissance d'antenne dans le système de stockage.

4. Procédé selon la revendication 3, dans lequel l'étalonnage des niveaux de puissance d'antenne dans le système de stockage comprend :
la mise en place d'une pluralité d'étiquettes d'étalonnage dans le système de stockage ;
le balayage des étiquettes d'étalonnage au moyen de chaque antenne à une pluralité de niveaux de puissance différents ;
l'identification du niveau de puissance minimal auquel chaque antenne repère chaque étiquette d'étalonnage ; et
le réglage d'une ou plusieurs valeurs d'étalonnage pour chaque antenne à partir des niveaux de puissance minimaux identifiés, et dans lequel l'étalonnage des niveaux de puissance d'antenne dans le système de stockage est répété avec les étiquettes d'étalonnage situées à une pluralité de niveaux différents dans le système de stockage.

5. Procédé selon la revendication 3 ou la revendication 4, dans lequel l'étalonnage des niveaux de puissance d'antenne compense des différences de bobine d'antenne, de sorte que chaque niveau de puissance logique de chaque antenne correspond à la même portée de bobine d'antenne.

6. Procédé selon l'une quelconque des revendications précédentes, dans lequel les étiquettes sont réglées sur un mode de puissance inférieur, qui réduit le nombre d'étiquettes dans le système de stockage qui sont actives, avant le balayage des étiquettes.

7. Procédé selon l'une quelconque des revendications précédentes, dans lequel une ou plusieurs des conditions suivantes s'appliquent :
les étiquettes comprennent une mémoire et le procédé comprend en outre l'étape consistant à stocker une valeur représentative du niveau de puissance auquel l'étiquette est repérée pour la première fois, et la mémoire est un champ d'horodatage et la valeur représentative du niveau de puissance auquel l'étiquette est repérée pour la première fois stockée dans le champ d'horodatage est un ID de niveau de puissance ;
le décalage de niveau de puissance est appliqué à un niveau de puissance logique pour l'antenne.

8. Procédé selon l'une quelconque des revendications précédentes, dans lequel l'étape consistant à estimer une position de chaque étiquette d'intérêt au moyen de l'antenne déterminée et du niveau de puissance le plus faible ayant identifié cette étiquette comprend l'identification d'une position horizontale de l'étiquette d'intérêt au niveau de hauteur du système de stockage au niveau duquel l'étiquette est identifiée comme étant située.

9. Procédé selon la revendication 8, dans lequel la position horizontale de l'étiquette d'intérêt est déterminée comme étant à une distance par rapport à l'antenne ayant le niveau de puissance le plus faible qui a identifié cette étiquette qui correspond à une portée de cette antenne à ce niveau de puissance.

10. Procédé selon l'une quelconque des revendications précédentes, dans lequel la première antenne et au moins une autre antenne sont situées sur ou dans le système de stockage.

11. Procédé selon la revendication 10, dans lequel le système de stockage comprend des niveaux de hauteur et au moins certains des niveaux de hauteur comprennent au moins deux antennes superposées ayant des bobines superposées.

12. Procédé selon la revendication 11, dans lequel chacune des au moins deux antennes ayant des bobines superposées comprend une première boucle ayant un premier flux de courant et une seconde boucle ayant un second flux de courant dans une direction opposée en rotation au premier flux de courant.

13. Procédé selon la revendication 12, dans lequel les bobines d'antenne superposées des antennes superposées sont agencées pour se superposer de telle sorte que les boucles sont alignées le long d'un axe, générant ainsi une zone de lecture continue le long de cet axe.

14. Procédé selon la revendication 13, dans lequel la zone de lecture continue correspond à une section du système de stockage.

15. Système (100) de détermination de l'emplacement d'un article muni d'une étiquette RFID situé dans un système de stockage configuré pour contenir une pluralité d'articles munis d'étiquette RFID, le système comprenant :
une pluralité de bobines d'antenne (102) configurées pour être associées à un ou plusieurs niveaux de hauteur du système de stockage ;
un dispositif de commande d'antenne (106) configuré pour mettre sous tension les bobines d'antenne à un niveau de puissance correspondant à un signal de niveau de puissance reçu ; et
un processeur (110) en communication avec le dispositif de commande d'antenne, le processeur étant configuré pour :
délivrer en sortie une pluralité de signaux de niveau de puissance vers le dispositif de commande d'antenne afin d'activer sélectivement chaque bobine d'antenne RFID à une pluralité de niveaux de puissance différents ;
recevoir des signaux de réponse provenant de chaque bobine d'antenne à chaque niveau de puissance ;
identifier chaque étiquette RFID repérée dans chaque signal de réponse reçu ; et
déterminer la bobine d'antenne ayant le niveau de puissance le plus faible qui a identifié chaque étiquette RFID d'intérêt ;
**caractérisé en ce que** le processeur (110) est en outre configuré pour estimer une position d'au moins un article muni d'étiquette RFID d'intérêt au moyen de la bobine d'antenne déterminée et du niveau de puissance le plus faible ayant identifié son étiquette, en :
appliquant un décalage de niveau de puissance qui polarise des niveaux de puissance d'antenne vers un niveau de hauteur inférieur pour chaque niveau de hauteur du système de stockage, et en identifiant ainsi un niveau de hauteur du système de stockage au niveau duquel l'étiquette est située.
